# EUROPÄISCHE PATENTSCHRIFT

(11) **EP 3 002 134 B1**
(45) Veröffentlichungstag und Bekanntmachung des Hinweises auf die Patenterteilung: **11.10.2017**
(21) Anmeldenummer: 15181125.4
(22) Anmeldetag: 14.08.2015
(51) Int. Cl.: B60C 23/04

(54) **REIFENÜBERWACHUNGSSYSTEM FÜR EIN FAHRZEUG**
TYRE MONITORING SYSTEM FOR A VEHICLE
SYSTEME DE SURVEILLANCE DE PNEU POUR UN VEHICULE

(30) Priorität: 02.10.2014 DE 102014114366
(43) Veröffentlichungstag der Anmeldung: 06.04.2016
(60) Teilanmeldung: 16166871.0
(73) Patentinhaber: Huf Hülsbeck & Fürst GmbH & Co. KG, 42551 Velbert (DE)
(72) Erfinder: GORENZWEIG, Igor, 42109 Wuppertal (DE); MÖNIG, Stefan, 58332 Schwelm (DE); DEMENTYEV, Yevgen, 42287 Wuppertal (DE); ARNOLDO, Sven, 76316 Malsch (DE); DUSSINGER, Axel, 74906 Bad Rappenau (DE); GAMER, Benedikt, 75045 Walzbachtal (DE)
(74) Vertreter: Zenz Patentanwälte Partnerschaft mbB

(56) Entgegenhaltungen:
- DE-U1-202009 007 703
- US-A1- 2012 312 389
- US-A1- 2014 283 923

## Beschreibung

Die Erfindung richtet sich auf ein Reifenüberwachungssystem für ein Fahrzeug zur Ermittlung reifenspezifischer Parameter, aufweisend einen Ventilkörper, wenigstens ein Befestigungselement und einen Reifenluftdrucksensor mit einem Gehäuse, in welchem Mittel zur Bestimmung mindestens eines reifenspezifischen Parameters und zur drahtlosen Übertragung des mindestens einen reifenspezifischen Parameters, vorzugsweise an ein fahrzeugseitiges Steuergerät, untergebracht sind, wobei das Gehäuse einen Befestigungsbereich aufweist und der Ventilkörper einen Befestigungsabschnitt umfasst, und wobei in einer Verriegelungsposition des wenigstens einen Befestigungselements der Befestigungsabschnitt des Ventilkörpers und der Befestigungsbereich des Gehäuses mit Hilfe des Befestigungselements lösbar miteinander verbunden sind, wobei der Befestigungsbereich des Gehäuses das wenigstens eine Befestigungselement zwischen der Verriegelungsposition und einer Entriegelungsposition, in welcher der Befestigungsbereich und der Befestigungsabschnitt voneinander lösbar sind, bewegbar lagert und wenigstens ein elastisches Rastelement vorgesehen ist, welches eine Bewegung des wenigstens einen Befestigungselements relativ zum Gehäuse in Richtung der Entriegelungsposition gegen eine von dem wenigstens einen elastischen Rastelement ausgeübte Druckkraft zulässt und welches das wenigstens eine Befestigungselement in die Verriegelungsposition drückt, und wobei das wenigstens eine Befestigungselement im Wesentlichen ringförmig oder kreissegmentförmig ausgebildet ist und einen Durchgang aufweist, durch den der Befestigungsabschnitt bei Montage des Ventilkörpers an dem Reifenluftdrucksensor steckbar ist, wobei bei montiertem Ventilkörper das wenigstens eine Befestigungselement den Befestigungsabschnitt des Ventilkörpers wenigstens abschnittsweise umgibt und ein Rastabschnitt des im Wesentlichen ringförmig oder kreissegmentförmig ausgebildeten Befestigungselements in der Verriegelungsposition mit dem Befestigungsabschnitt des Ventilkörpers zumindest abschnittsweise in Eingriff steht.

Die Fahrzeugsicherheit und Zuverlässigkeit sind zentrale Aspekte in der Automobiltechnik. Daher sollte allein schon aus sicherheitstechnischen Gründen der Reifendruck von Fahrzeugen bzw. Kraftfahrzeugen regelmäßig überprüft werden, was jedoch häufig vom Fahrzeugführer versäumt wird. Aus diesem Grund werden in modernen Fahrzeugen vermehrt Erfassungsvorrichtungen in Form von Reifenluftdrucksensoren verwendet, die den Reifenluftdruck automatisch messen und an ein fahrzeugseitiges Steuergerät senden. Dadurch sollen Defekte oder Unfälle, welche auf einen zu niedrigen Reifenluftdruck zurückzuführen sind, vermieden werden. Folglich soll durch diese automatische Messung des Reifenluftdrucks eine kritische Abweichung des gemessenen Reifenluftdrucks von einem Reifendrucksollwert frühzeitig erkannt und dem Fahrzeugführer angezeigt werden, so dass eine manuelle Überprüfung entbehrlich ist. Bei solchen Systemen zur automatischen Messung des Reifenluftdrucks ist jeweils ein Reifenluftdrucksensor an jedem Rad bzw. Luftreifen angeordnet. Ein Reifenluftdrucksensor umfasst dabei oft mindestens einen Sensor zur Erfassung des Reifenluftdrucks oder der Temperatur sowie eine Sendeeinheit und gegebenenfalls eine Auswerteelektronik, die aber auch fahrzeugseitig vorgesehen sein kann.

Bei einem aus der DE 10 2010 050 365 A1 bekannten Reifenüberwachungssystem umfasst dieses einen Ventilkörper, einen Reifenluftdrucksensor und ein den Ventilkörper an dem Reifenluftdrucksensor fixierendes Befestigungselement, wobei das Befestigungselement als eine Schraube ausgebildet. Zur Montage des Ventilkörpers an dem Reifenluftdrucksensor wird der Ventilkörper mit seinem Befestigungsabschnitt in eine an dem Gehäuse des Reifenluftdrucksensors ausgebildete Aufnahme eingesteckt. Die Aufnahme weist eine Bohrung auf, die quer zur Einsteckrichtung des Ventilkörpers verläuft und in die das als Schraube ausgebildete Befestigungselement eingeschraubt wird, um den Ventilkörper an dem Gehäuse zu befestigen. Nachteilig bei diesem bekannten Reifendruckkontrollsystem ist es, dass bei dem Montagevorgang die Gefahr besteht, dass das als Schraube ausgebildete Befestigungselement verloren geht und dass eine Montagehilfe in Form eines Schraubendrehers notwendig ist, um die Schraubverbindung herzustellen, die letztlich den Ventilkörper an dem Gehäuse des Reifenluftdrucksensors hält.

Ein Reifenüberwachungssystem der Eingangs bezeichneten Art ist zum Beispiel aus der US2014/283923 A1, der DE 20 2009 007 703 U1 und der US 2012/312389 A1 bekannt.

Ferner ist aus der DE 10 2004 048 244 A1 ein Reifenüberwachungssystem bekannt. Dieses bekannte Reifenüberwachungssystem weist ebenfalls einen Ventilkörper, einen Reifenluftdrucksensor und ein den Ventilkörper an dem Reifenluftdrucksensor fixierendes Befestigungselement auf. Bei diesem Reifendruckkontrollsystem ist das Befestigungselement hingegen als ein Federclip ausgebildet, wobei der Ventilkörper in eine an dem Gehäuse des Reifenluftdrucksensors ausgebildete Aufnahme zur Befestigung des Ventilkörpers an dem Reifenluftdrucksensor eingesteckt wird. Die Aufnahme weist einen Einsteckschlitz auf, der quer zur Einsteckrichtung des Ventilkörpers verläuft und in die das als Federclip ausgebildete Befestigungselement eingesteckt wird, um in eine in der Umfangsfläche des Befestigungsabschnitts des Ventilkörpers ausgebildete Ausnehmung einzugreifen und dadurch den Ventilkörper an dem Gehäuse zu befestigen. Dabei nimmt das Befestigungselement eine Verriegelungsposition ein. Bei diesem bekannten Reifenüberwachungssystem besteht der Nachteil darin, dass das Befestigungselement als separates Bauteil vorgesehen ist, welches entweder beim Transport oder bei Montage/Demontage verloren gehen kann. Insbesondere besteht bei diesem bekannten Reifenüberwachungssystem die Gefahr, dass sich das Befestigungselement im Betrieb lockern und die Verriegelungsposition verlassen kann, so dass sich der Reifenluftdrucksensor von dem Ventilkörper lösen kann und beschädigt werden kann.

Der Erfindung liegt die Aufgabe zugrunde eine Lösung zu schaffen, die auf konstruktiv einfache Weise ein Reifenüberwachungssystem bereitstellt, das leicht, kompakt, kostengünstig und einfach zu montieren ist.

Bei einem Reifenüberwachungssystem der Eingangs bezeichneten Art wird die Aufgabe erfindungsgemäß dadurch gelöst, dass das wenigstens eine elastische Rastelement als einstückig mit dem Gehäuse ausgebildeter Federarm ausgebildet ist, wobei der Federarm mit seinem ersten Längsende mit dem Gehäuse verbunden ist und sein zweites Längsende derart gegen das wenigstens eine Befestigungselement drückt, dass das wenigstens eine elastische Rastelement auf das wenigstens eine Befestigungselement eine Druckkraft in einer von der Unterseite des Gehäuses fort weisenden Richtung ausübt.

Vorteilhafte und zweckmäßige Ausgestaltungen und Weiterbildungen der Erfindung ergeben sich aus den Unteransprüchen.

Durch die Erfindung wird ein Reifenüberwachungssystem für ein Fahrzeug zur Ermittlung reifenspezifischer Parameter zur Verfügung gestellt, das sich durch eine funktionsgerechte Konstruktion auszeichnet und einen einfachen und kostengünstigen Aufbau aufweist. Dadurch, dass das Gehäuse das Befestigungselement zwischen der Verriegelungsposition und der Entriegelungsposition bewegbar lagert, kann eine werkzeuglose Montage und Demontage von Ventilkörper und Reifenluftdrucksensor durchgeführt werden, indem das Befestigungselement in die Entriegelungsposition bewegt wird. Um das Befestigungselement aus der Verriegelungsposition in die Entriegelungsposition zu bewegen, muss ein Monteur lediglich eine Druckkraft überwinden, die von dem elastischen Rastelement ausgeübt wird und die das Befestigungselement in die Verriegelungsposition drückt bzw. drängt. Dieses Überwinden der Druckkraft kann durch allein durch händische Manipulation erfolgen, so dass eine werkzeuglose Montage und Demontage von Ventilkörper und Reifenluftdrucksensor möglich ist.

Zur Realisierung einer vorbestimmten und definierten Bewegung des Befestigungselements zwischen der Verriegelungsposition und der Entriegelungsposition besteht eine konstruktiv günstige Möglichkeit darin, dass in dem schornsteinförmig ausgebildeten Befestigungsbereich eine schlitzförmige Ausnehmung ausgebildet ist, die sich bei montiertem Ventilkörper quer zu dessen Längsachse erstreckt und in der das wenigstens eine Befestigungselement zwischen der Verriegelungsposition und der Entriegelungsposition verschiebbar gehalten ist.

Zur Erleichterung der Montage des Ventilkörpers an dem Reifenluftdrucksensor sieht die Erfindung in weiterer Ausgestaltung vor, dass der Befestigungsabschnitt des Ventilkörpers eine rampenförmige Schrägfläche aufweist, die auf einem Abschnitt der Umfangsfläche des Ventilkörpers ausgebildet ist, wobei die rampenförmige Schrägfläche bei Montage des Ventilkörpers das bewegbar gelagerte Befestigungselement über den Rastabschnitt in die Entriegelungsposition drängt. Dadurch ist bei Montage keine Handhabung des Befestigungselements durch den Monteur notwendig, denn die rampenförmige Schrägfläche drückt den Rastabschnitt aus dem Bewegungsweg des Ventilkörpers.

Besonders günstig im Hinblick auf eine einfache Montage und sichere Fixierung des Ventilkörpers an dem Reifenluftdrucksensor ist es, wenn in Ausgestaltung der Erfindung der Befestigungsabschnitt des Ventilkörpers eine Rastausnehmung aufweist, die von der Stirnseite des Befestigungsabschnitts aus in Längsrichtung des Ventilkörpers betrachtet hinter der rampenförmigen Schrägfläche an dem Befestigungsabschnitt ausgebildet ist und in die der Rastabschnitt des Befestigungselement in Verriegelungsposition eingreift. Somit sorgt die rampenförmige Schrägfläche zunächst wie vorstehend bereits ausgeführt für eine einfachere Montage, wobei der Rastabschnitt des Befestigungselements nach Vorüberschreiten an der rampenförmigen Schrägfläche in die Rastausnehmung eingreift, so dass der Ventilkörper an dem Reifenluftdrucksensor befestigt ist.

Die Rastausnehmung und der Rastabschnitt bilden eine Art ersten Verschluss, um den Ventilkörper an dem Reifenluftdrucksensor zu befestigen. Um diese Befestigung zu erhöhen, sieht die Erfindung in weiterer Ausgestaltung der Erfindung vor, dass von dem Befestigungsabschnitt des Ventilkörpers wenigstens eine Blockierungsnase absteht, wobei der Durchgang einen an die wenigstens eine Blockierungsnase angepassten Entriegelungsabschnitt aufweist, der in Verriegelungsposition außerhalb des Bewegungsweges des Ventilkörpers derart angeordnet ist, dass die wenigstens eine Blockierungsnase an dem Befestigungselement anliegt und eine von dem Reifenluftdrucksensor weg gerichtete Bewegung des Ventilkörpers blockiert, und der in Entriegelungsposition im Bewegungsweg des Ventilkörpers derart angeordnet ist, dass der Ventilkörper zur Demontage aus dem Durchgang herausziehbar ist. Das Befestigungselement kann nach Art eines Sicherungsringes bzw. Seegerrings, der aber beweglich zwischen der Verriegelungsposition und der Entriegelungsposition bewegbar ist, ausgebildet sein, wobei der Sicherungsring mit dem Befestigungsabschnitt des Ventilkörpers in Verriegelungsposition in Eingriff steht, um den Ventilkörper in seiner axialen Lage zu sichern, und in Entriegelungsposition den Ventilkörper in axialer Bewegungsrichtung freigibt.

Der Ausdruck "einstückig" ist bei der vorliegenden Erfindung als Synonym für die Bezeichnung "einteilig" zu verstehen. Dabei meint "einstückig" im Sinne der Erfindung nicht zwangsläufig, dass das Rastelement zusammen mit dem Gehäuse derart gefertigt sein muss, dass diese Bauteile aus einem einzigen und einheitlichen Teil oder Werkstoff gefertigt sein müssen, was aber durchaus für die vorliegende Erfindung auch unter "einstückig" zu verstehen ist. "Einstückig" im Sinne der Erfindung meint zusätzlich Ausführungen, bei denen das Rastelement und das Gehäuse des Reifenluftdrucksensors nicht nur fest sondern so innig miteinander verbunden sind, dass sie nicht als mehrere aneinander gefügte Bauteile erscheinen und nur voneinander gelöst werden können, wenn sie dabei zerstört werden.

Es gilt, dass die Druckkraft des wenigstens einen elastischen Rastelements von der Unterseite des Gehäuses fort gerichtet ist. Die Unterseite des Gehäuses ist auf der Felge des Fahrzeugreifens angebracht, so dass die Druckkraft des Rastelements in die gleiche Richtung wie die Beschleunigungs- bzw. Zentrifugalkraft wirkt. Nach Montage des Reifenüberwachungssystems am Fahrzeugreifen unterstützt folglich die Beschleunigungs- bzw. Zentrifugalkraft die Befestigung des Ventilkörpers an dem Reifenluftdrucksensor, da sie der Druckkraft nicht entgegen sondern in die gleiche Richtung wie die Druckkraft bzw. Druckkraft des Rastelements wirkt.

In Ausgestaltung ist es von Vorteil, wenn sich parallel zu dem wenigstens einen elastischen Rastelement zumindest ein Schutzwandelement erstreckt, welches auf dem Gehäuse angeformt ist und das wenigstens eine elastische Rastelement in einer von dem Gehäuse fort weisenden Richtung überragt. Eine Beschädigung oder unbeabsichtigte Betätigung des Rastelements ist folglich ausgeschlossen.

Damit das Befestigungselement an dem Gehäuse gesichert gehalten ist und beispielsweise nicht aus der schlitzförmigen Ausnehmung herausgleitet, was bei nicht montiertem Ventilkörper passieren könnte, sieht die Erfindung in Ausgestaltung vor, dass der Befestigungsbereich des Gehäuses zumindest einen Sicherungsarm aufweist, der das wenigstens eine Befestigungselement an dem Befestigungsbereich des Gehäuses sichert, indem der zumindest eine Sicherungsarm eine von der Entriegelungsposition über die Verriegelungsposition hinaus gerichtete Bewegung des wenigstens einen Befestigungselements blockiert.

Diesbezüglich sieht die Erfindung in einer besonderen Ausgestaltung weiter vor, dass das wenigstens eine Befestigungselement einen Blockierungsarm aufweist, der in Verriegelungsposition des wenigstens einen Befestigungselements an dem Sicherungsarm des Gehäuses anliegt. Der Sicherungsarm ermöglicht folglich eine Bewegung des Befestigungselements aus der Entriegelungsposition maximal in die Verriegelungsposition.

Schließlich sieht die Erfindung in weiterer Ausgestaltung des Reifenüberwachungssystems vor, dass der Befestigungsabschnitt des Ventilkörpers zumindest abschnittsweise eine Abflachung aufweist und der Befestigungsbereich des Gehäuses eine komplementär zur Abflachung ausgebildete Einsteckaufnahme aufweist, so dass zur Montage des Ventilkörpers an dem Reifenluftdrucksensor der Befestigungsabschnitt des Ventilkörpers verdrehsicher in die Einsteckaufnahme einsteckbar ist.

Zur Erleichterung der Montage ist vorgesehen, dass das elastische Rastelement eine das Befestigungselement in die Verriegelungsposition drängende Vorspannkraft auf das Befestigungselement ausübt. Durch diese Vorspannung ist das Befestigungselement stets in seine Verriegelungsposition gehalten, sofern nicht der Monteur zu Zwecken der Montage oder Demontage das Befestigungselement in die Entriegelungsposition drängt.

Die Erfindung sieht in weiterer Ausgestaltung vor, dass das Befestigungselement einen hakenförmig und kopfseitig ausgebildeten Halteansatz mit wenigstens einem Abstützabschnitt, der sich an dem Befestigungsbereich abstützt, aufweist. Der Abstützabschnitt erhöht die Festigkeit für die Anbringung des Ventilkörpers und vermindert dadurch die Gefahr, dass der Ventilkörper aus dem Gehäuse des Reifenluftdrucksensors heraus gerissen werden kann. Darüber hinaus erleichtert der hakenförmig ausgebildete Halteansatz insgesamt die Herstellung, da keine engen Toleranzen einzuhalten sind, denn die Positionierung des Befestigungselements muss nicht mehr auf Basis der Geometrie der schlitzförmigen Ausnehmung erfolgen sondern ist durch die Abstützung des Abstützabschnitts an dem Befestigungsbereich vorgegeben.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 in Perspektivansicht ein Reifenüberwachungssystem gemäß einer ersten Ausführungsform,
Figur 2 das Reifenüberwachungssystem aus Figur 1 in einer perspektivischen Einzelteildarstellung,
Figur 3 eine vergrößerte Ansicht auf einen Befestigungsbereich eines Reifenluftdrucksensors des Reifenüberwachungssystems aus Figur 1,
Figur 4 eine weitere vergrößerte Ansicht auf den Befestigungsbereich des Reifenluftdrucksensors des Reifenüberwachungssystems aus Figur 1,
Figur 5 ein erfindungsgemäßes Reifenüberwachungssystem gemäß einer zweiten Ausführungsform in einer perspektivischen Einzelteildarstellung,
Figur 6 das erfindungsgemäße Reifenüberwachungssystem aus Figur 5 in Perspektivansicht bei montiertem Ventilkörper,
Figur 7 eine vergrößerte Ansicht auf einen Befestigungsbereich eines Reifenluftdrucksensors des Reifenüberwachungssystems aus Figur 5,
Figur 8 eine vergrößerte Ansicht eines Reifenüberwachungssystems gemäß einer dritten Ausführungsform,
Figur 9 eine vergrößerte Ansicht des in Figur 8 gezeigten Reifenüberwachungssystems in einer Einzelteildarstellung,
Figur 10 in einer perspektivischen Einzelteildarstellung ein erfindungsgemäßes Reifenüberwachungssystem gemäß einer vierten Ausführungsform,
Figur 11 eine vergrößerte Ansicht auf die Stirnseite eines Ventilkörpers und eines damit in Eingriff stehenden Befestigungselements gemäß der vierten Ausführungsform,
Figur 12 eine vergrößerte Ansicht auf einen Befestigungsbereichs eines Reifenluftdrucksensors und des Befestigungselements in einer Verriegelungsposition gemäß der vierten Ausführungsform,
Figur 13 eine vergrößerte Ansicht auf die Stirnseite des Ventilkörpers und des damit nicht mehr in Eingriff stehenden Befestigungselements gemäß der vierten Ausführungsform,
Figur 14 eine vergrößerte Ansicht auf den Befestigungsbereich des Reifenluftdrucksensors und des Befestigungselements in einer Entriegelungsposition gemäß der vierten Ausführungsform,
Figur 15 in einer perspektivischen Einzelteildarstellung ein erfindungsgemäßes Reifenüberwachungssystem gemäß einer fünften Ausführungsform,
Figur 16 in einer vergrößerten Darstellung einen Ventilkörper und ein Befestigungselement gemäß der in Figur 15 gezeigten fünften Ausführungsform,
Figur 17 das Reifenüberwachungssystem gemäß der fünften Ausführungsform mit dem Befestigungselement in Verriegelungsposition und
Figur 18 das Reifenüberwachungssystem gemäß der fünften Ausführungsform mit dem Befestigungselement in Entriegelungsposition.

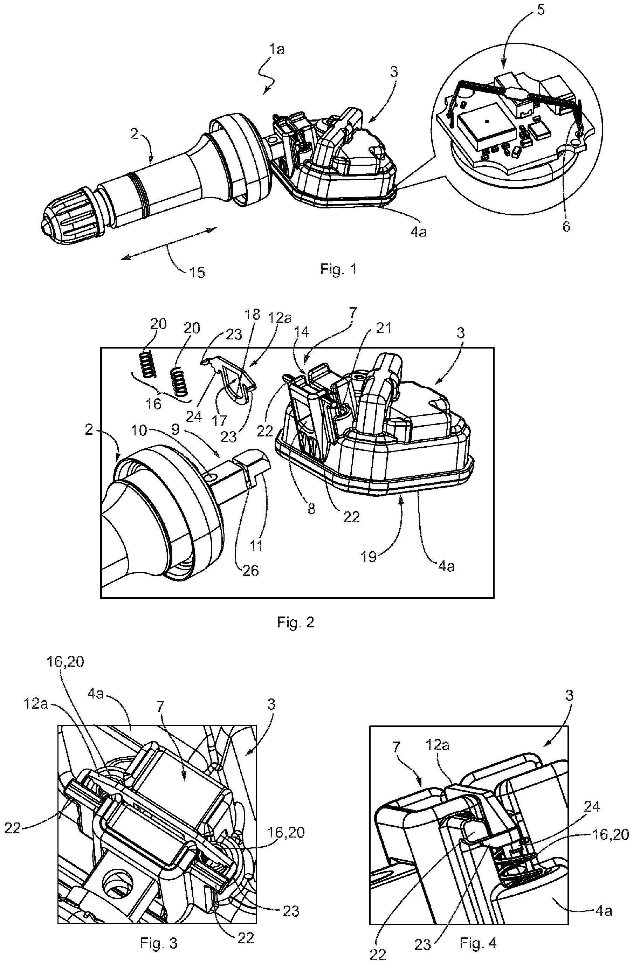

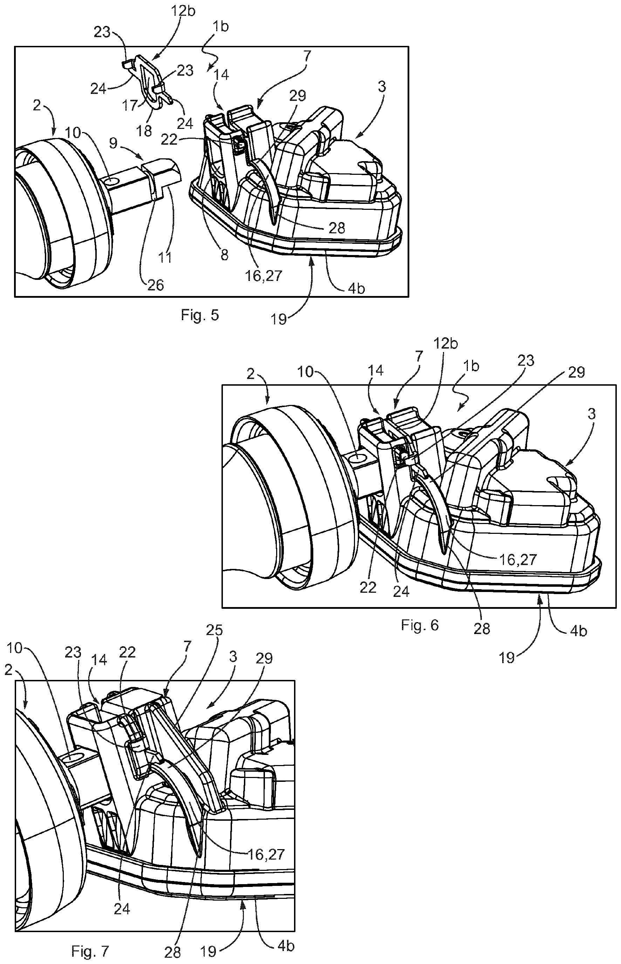

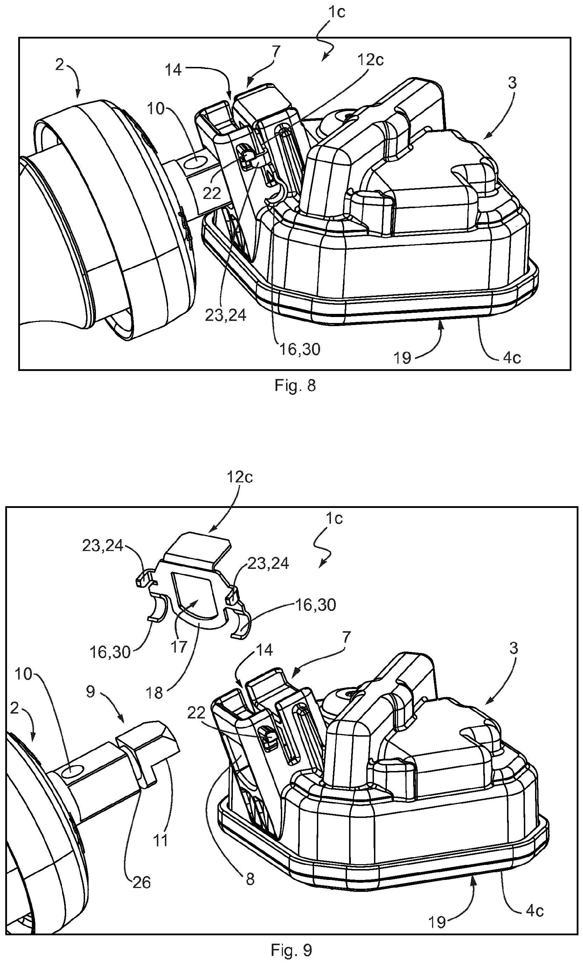

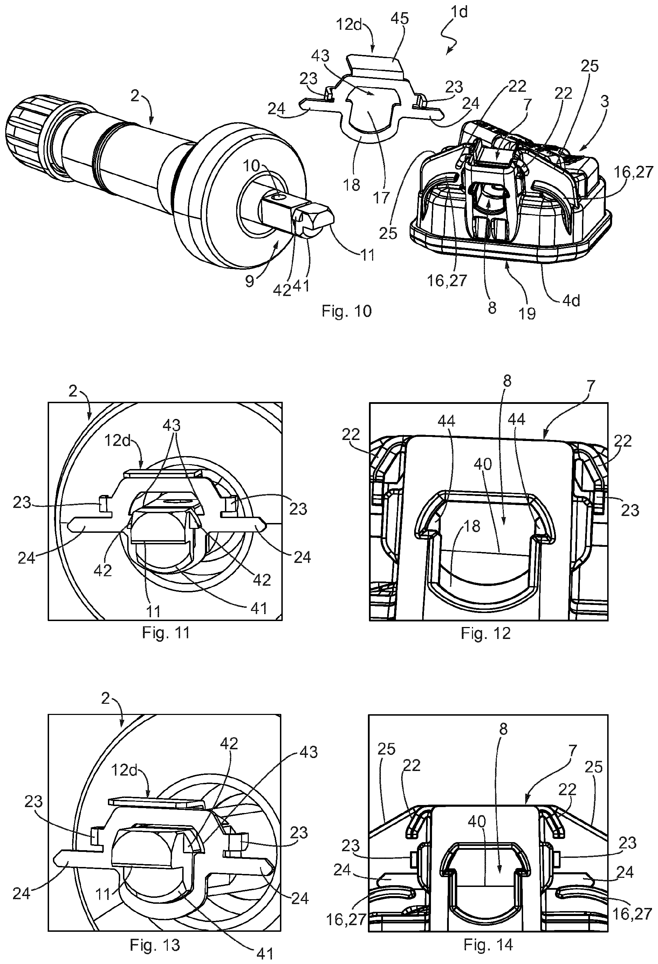

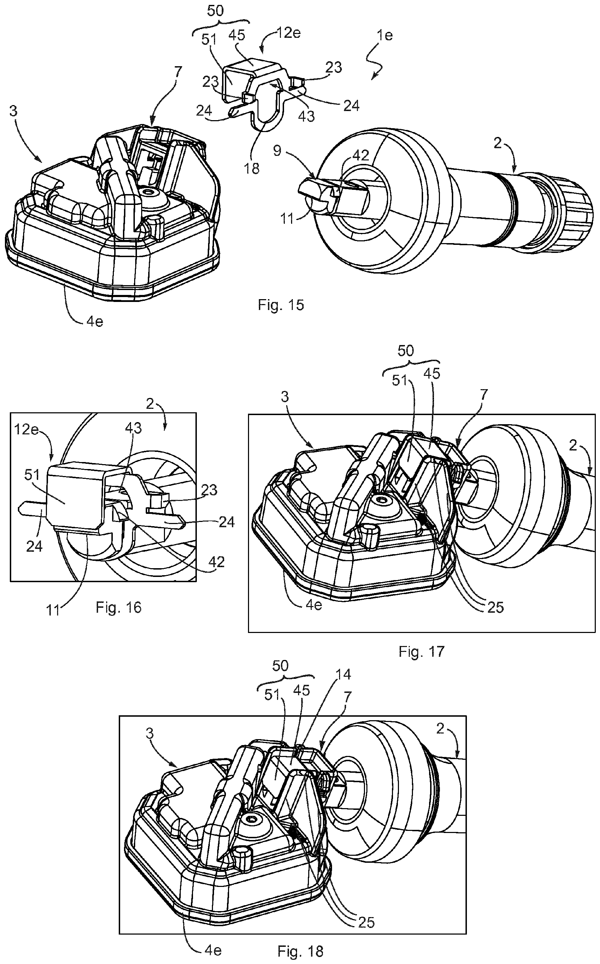

In den Figuren 1 bis 4 ist ein Reifenüberwachungssystem 1a gemäß einer ersten Ausführungsform gezeigt, wohingegen die Figuren 5 bis 7 ein erfindungsgemäßes Reifenüberwachungssystem 1b gemäß einer zweiten Ausführungsform, die Figuren 8 und 9 ein Reifenüberwachungssystem 1c gemäß einer dritten Ausführungsform, die Figuren 10 bis 14 ein erfindungsgemäßes Reifenüberwachungssystem 1d gemäß einer vierten Ausführungsform und die Figuren 15 bis 18 eine fünfte Ausführungsform eines erfindungsgemäßen Reifenüberwachungssystem 1e zeigen. Soweit bei den Ausführungsformen gleiche Bezugszeichen verwendet werden, betreffen diese jeweils identische oder gleiche Elemente oder Bauteile, so dass die einmalige Beschreibung der Elemente oder Bauteile einer Ausführungsform auch für die übrigen Ausführungsformen gilt. Das Reifenüberwachungssystem 1a bzw. 1b bzw. 1c bzw. 1d bzw. 1e ist bekanntermaßen bei einem Fahrzeug einsetzbar und dient zur Ermittlung reifenspezifischer Parameter, wie beispielsweise Luftdruck oder Temperatur. Der ermittelte Parameter wird dann in bekannter Weise an ein in den Figuren nicht dargestelltes fahrzeugseitiges Steuergerät übermittelt, wo der Parameter ausgewertet und ggf. Maßnahmen eingeleitet werden.

Das in den Figuren 1 bis 4 gezeigte Reifenüberwachungssystem 1a umfasst einen Ventilkörper 2 und einen Reifenluftdrucksensor 3. Der Reifenluftdrucksensor 3 weist ein Gehäuse 4a auf, in oder an dem Mittel 5 zur Bestimmung mindestens eines reifenspezifischen Parameters und zur drahtlosen Übertragung des mindestens einen reifenspezifischen Parameters an ein fahrzeugseitiges Steuergerät untergebracht sind. Das bzw. die Mittel 5 sind lediglich in der seitlichen vergrößerten Darstellung von Figur 1, bei der das Gehäuse 4a entfernt ist, exemplarisch in Form eines Sensors 6 gezeigt, wobei auch die Reifenluftdrucksensoren 3 der zweiten und dritten Ausführungsform, d.h. die Gehäuse 4b und 4c, die angesprochenen Mittel unterbringen, die aber nur in Figur 1 exemplarisch für die anderen Ausführungsformen gezeigt sind.

Mit Bezug auf die Figuren 1 bis 9, d.h. mit Bezug auf alle drei Ausführungsformen, weist das entsprechende Gehäuse 4a, 4b, 4c einen Befestigungsbereich 7 auf, der schornsteinförmig von dem jeweiligen Gehäuse 4a, 4b, 4c absteht und zur Fixierung des Ventilkörpers 2 dient. Zu diesem Zweck ist an dem entsprechenden Befestigungsbereich 7 des jeweiligen Gehäuses 4a, 4b, 4c eine Einsteckaufnahme 8 ausgebildet, die der Aufnahme eines in die Einsteckaufnahme 8 einbringbaren Befestigungsabschnitts 9 des Ventilkörpers 2 dient. Zur Ausrichtung einer Öffnung 10 des Ventilkörpers 2, über die dem Reifen des Fahrzeugs Luft zuführbar ist, weist der Befestigungsabschnitt 9 des Ventilkörpers 2 eine Abflachung 11 auf (siehe zum Beispiel Figur 2), wobei die Einsteckaufnahme 8 komplementär zu dem Befestigungsabschnitt 9 mit Abflachung 11 ausgebildet ist, so dass zur Montage des Ventilkörpers 2 an dem Gehäuse 4a des Reifenluftdrucksensors 3 der Befestigungsabschnitt 9 des Ventilkörpers 2 verdrehsicher in die Einsteckaufnahme 8 einsteckbar und auch eingesteckt ist.

Bei dem Reifenüberwachungssystem 1a gemäß der ersten Ausführungsform, die in den Figuren 1 bis 4 gezeigt ist, umfasst der Befestigungsbereich 7 ein Befestigungselement 12a, welches im Detail in Figur 2 dargestellt ist. Das Befestigungselement 12a ist in einer schlitzförmigen Ausnehmung 14 des Befestigungsbereichs 7 gehalten und zwischen einer Verriegelungsposition und einer Entriegelungsposition in der schlitzförmigen Ausnehmung 14 bewegbar. Die schlitzförmige Ausnehmung 14 erstreckt sich bei montiertem Ventilkörper 2 (siehe zum Beispiel Figur 1) quer zu der Längsachse 15 des Ventilkörpers 2. Das Befestigungselement 12a ist ringförmig ausgebildet und weist einen Durchgang 17 auf, durch den zumindest der Befestigungsabschnitt 9 des Ventilkörpers 2 hindurchgesteckt werden kann. Folglich umgibt bei montiertem Ventilkörper 2 das Befestigungselement 12a den Befestigungsabschnitt 9 des Ventilkörpers 2. In der Verriegelungsposition des Befestigungselements 12a ist der Befestigungsabschnitt 9 des Ventilkörpers 2 an dem Befestigungsbereich 7 des Gehäuses 4a mit Hilfe des Befestigungselements 12a lösbar befestigt, wohingegen in der Entriegelungsposition der Befestigungsbereich 7 und der Befestigungsabschnitt 9 voneinander lösbar sind. Mit anderen Worten lagert der Befestigungsbereich 7 des Gehäuses 4a das Befestigungselement 12a zwischen der Verriegelungsposition und der Entriegelungsposition bewegbar. In der Verriegelungsposition steht ein Rastabschnitt 18 des ringförmig ausgebildeten Befestigungselements 12a mit dem Befestigungsabschnitt 9 des Ventilkörpers 2 zumindest abschnittsweise in Eingriff, wobei der Rastabschnitt 18 ein Ringsegment des Befestigungselements 12a ist, der in Verriegelungsposition in eine Rastausnehmung 26 des Befestigungsabschnitts 9 eingreift. Die Rastausnehmung 26 in dem Befestigungsabschnitt 9 des Ventilkörpers 2 ist umlaufend ausgebildet, wobei dies nicht zwingend erforderlich ist. Wichtig ist, dass das ringförmige Befestigungselement 12a mit seinem Rastabschnitt 18 mit der Rastausnehmung 26 derart in Eingriff bringbar ist, dass eine Bewegung des Ventilkörpers 2 aus der Einsteckaufnahme 8 heraus blockiert ist. Ein elastisches Rastelement 16 drückt das Befestigungselement 12a in die in den Figuren 3 und 4 gezeigte Verriegelungsposition. Das elastische Rastelement 16 lässt eine Bewegung des Befestigungselements 12a relativ zum Gehäuse 4 zu, wobei diese Relativbewegung in Richtung der Unterseite 19 des Gehäuses 4a gerichtet ist und das Befestigungselement 12a in die Entriegelungsposition bringt. Diese Relativbewegung bzw. Bewegung in Richtung der Entriegelungsposition erfolgt dabei entgegen der von dem elastischen Rastelement 16 ausgeübten Druckkraft. Bei der ersten Ausführungsform ist das elastische Rastelement 16 als Federelement 20 mit zwei Spiralfedern ausgebildet. Die Spiralfedern des Federelements 20 sind in jeweilige Ausnehmungen 21 des Gehäuses 4a eingesetzt und stützen sich derart am Boden der jeweiligen Ausnehmung 21 ab, dass das elastische Rastelement 16 bzw. Federelement 20 auf das Befestigungselement 12a eine Druckkraft in einer von der Unterseite 19 des Gehäuses 4a fort weisenden bzw. weg gerichteten Richtung ausübt. Die Ausnehmungen 21 sind seitlich von dem Befestigungsbereich 7 ausgebildet. Wenn das Befestigungselement 12a in der schlitzförmigen Ausnehmung 14 angeordnet ist, wirken die Spiralfedern des Federelements 20 auf jeweilige Betätigungsansätze 24 ein, die seitlich und nach außen abragend an dem Befestigungselement 12a angeformt sind. Um das Befestigungselement 12a aus der in den Figuren 1, 3 und 4 gezeigten Verriegelungsposition, welche eine Grundposition des in der schlitzförmigen Ausnehmung 14 bewegbar gehaltenen Befestigungselements 12a ist, in die Entriegelungsposition zu gelangen, muss das Befestigungselement 12a gegen die Kraft des Federelements 20 herunter gedrückt werden, wobei dabei die Betätigungsansätze 24 auf die Spiralfedern des Federelements 20 drücken. Wenn kein Druck mehr von oben auf das Betätigungselement 12a wirkt, wird die Druckkraft des Federelements 20 gegen die Betätigungsansätze 23 drücken und das Befestigungselement 12a wieder in die Verriegelungsposition drängen.

Das Reifenüberwachungssystem 1b der zweiten Ausführungsform, die in den Figuren 5 bis 7 gezeigt ist, weist große Übereinstimmungen mit der ersten Ausführungsform auf, so dass folglich die Beschreibung zu der ersten Ausführungsform auch für übereinstimmende Bauteile und technische Zusammenhänge der zweiten Ausführungsform gilt. Das Reifenüberwachungssystem 1b weist ebenfalls ein Befestigungselement 12b auf, welches in der schlitzförmigen Ausnehmung 14 des Befestigungsbereichs 7 des Gehäuses 4b zwischen der Verriegelungsposition und der Entriegelungsposition bewegbar gehalten ist. Auch das Befestigungselement 12b des Reifenüberwachungssystems 1b der zweiten Ausführungsform ist ringförmig ausgebildet und weist einen Rastabschnitt 18 auf, der als Ringsegment des ringförmigen Körpers des Befestigungselements 12b ausgebildet ist und der in Verriegelungsposition des Befestigungselements 12b in die Rastausnehmung 26 des Befestigungsabschnitts 9 eingreift, um den Ventilkörper 2 in der Einsteckaufnahme 8 zu sichern. Ebenfalls drückt bei der zweiten Ausführungsform das elastische Rastelement 16 das Befestigungselement 12b in die in Figur 6 gezeigte Verriegelungsposition und lässt eine Bewegung des Befestigungselements 12b relativ zum Gehäuse 4 zu, wobei die Relativbewegung in Richtung der Unterseite 19 des Gehäuses 4a gerichtet ist und das Befestigungselement 12a in die Entriegelungsposition bringt. Das Rastelement 16 drückt insbesondere das Befestigungselement 12b in die Verriegelungsposition und dabei den Rastabschnitt 18 des Befestigungselements 12b in die Rastausnehmung 26 des Ventilkörpers 2. Um das Befestigungselement 12b außer Eingriff mit dem Ventilkörper 2 zu bringen, muss das Befestigungselement 12b aus der Verriegelungsposition nach unten in die Entriegelungsposition gedrückt werden, wobei diese Relativbewegung zum Gehäuse 4b entgegen der von dem elastischen Rastelement 16 ausgeübten Druckkraft erfolgt. Bei der zweiten Ausführungsform ist das elastische Rastelement 16 als einstückig mit dem Gehäuse 4b ausgebildeter Federarm 27 ausgebildet. Insgesamt sind zwei Federarme 27 auf dem Gehäuse 4b angeformt, wobei die Federarme 27 auf beiden Seite des Befestigungsbereichs 7 neben der schlitzförmigen Ausnehmung 14 angeordnet sind. Ein erstes Längsende 28 eines jeweiligen Federarms 27 ist dabei mit dem Gehäuse 4b einstückig verbunden, wohingegen das andere, zweite Längsende 29 eines jeweiligen bogenförmig ausgebildeten Federarms 27 gegen einen jeweiligen Betätigungsansatz 24 des Befestigungselements 12b drückt. Dabei drücken die Federarme 27 derart gegen die Betätigungsansätze 24 des Befestigungselements 12b, dass die Federarme 27 eine Druckkraft in eine von der Unterseite 19 des Gehäuses 4b fort bzw. weg weisende Richtung ausüben und das Befestigungselement 12b in die Verriegelungsposition drängen. Eine Demontage des Ventilkörpers 2 erfolgt dann dadurch, dass das Befestigungselement 12b entgegen der von den Federarmen 27 ausgeübten Druckkraft nach unten gedrückt wird, wodurch der Rastabschnitt 18 des Befestigungselement 12b außer Eingriff mit der Rastausnehmung 26 des Ventilkörpers 2 gelangt, so dass der Ventilkörper 2 aus der Einsteckaufnahme 8 herausgezogen werden kann. In Figur 7 ist eine Weiterbildung der zweiten Ausführungsform dargestellt. Bei dieser Weiterbildung erstreckt sich parallel zu dem Rastelement 16 ein Schutzwandelement 25. Genauer gesagt erstreckt sich parallel zu jeweils einem Federarm 27 ein Schutzwandelement 25. Das Schutzwandelement 2 ist auf dem Gehäuse 4b angeformt und überragt die Federarme 20 in einer von dem Gehäuse 4b fort weisenden Richtung. Die Schutzwandelemente 25 beidseitig des Befestigungsbereichs 7 verhindern eine unerwünschte Betätigung oder Beschädigung der Federarme 20 zum Beispiel bei der Montage und Demontage des Reifenüberwachungssystems 1b an einem Reifen eines Fahrzeugs.

Auch die dritte Ausführungsform des Reifenüberwachungssystems 1c, welches in den Figuren 8 und 9 gezeigt ist, weist große Übereinstimmungen mit der ersten Ausführungsform auf, so dass die Beschreibung zu der ersten Ausführungsform auch hierbei für übereinstimmende Bauteile und technische Zusammenhänge der dritten Ausführungsform gilt. Das Reifenüberwachungssystem 1c umfasst ein Befestigungselement 12c, welches wiederum in der schlitzförmigen Ausnehmung 14 des Befestigungsbereichs 7 des Gehäuses 4c zwischen der Verriegelungsposition und der Entriegelungsposition bewegbar gehalten ist. Auch das Befestigungselement 12c des Reifenüberwachungssystems 1c der dritten Ausführungsform ist im Wesentlichen ringförmig ausgebildet. Das Befestigungselement 12c weist den als Ringsegment ausgeführten Rastabschnitt 18 auf, der in Verriegelungsposition des Befestigungselements 12c in die Rastausnehmung 26 des Befestigungsabschnitts 9 eingreift, wodurch der Ventilkörper 2 in der Einsteckaufnahme 8 gesichert ist. Wie bei den anderen beiden Ausführungsformen, so drückt auch bei der dritten Ausführungsform das elastische Rastelement 16 das Befestigungselement 12c in die in Figur 8 gezeigte Verriegelungsposition. Um das Befestigungselement 12c in die Entriegelungsposition zu bewegen und den Rastabschnitt 18 außer Eingriff mit der Rastausnehmung 26 zu bringen, muss das Befestigungselement 12c in der schlitzförmigen Ausnehmung 14 nach unten in Richtung der Unterseite 19 des Gehäuses 4c gedrückt werden, wozu es gegen die von dem Rastelement ausgeübte Druckkraft bewegt werden muss. Bei der dritten Ausführungsform umfasst das elastische Rastelement 16 zwei Federarme 30, die einstückig mit dem Befestigungselement 12c ausgebildet sind. Die beiden Federarme 30 sind an gegenüberliegenden Seiten an dem Befestigungselement 12c ausgebildet und elastisch verformbar, wobei sie sich in der in Figur 8 gezeigten Verriegelungsposition des Befestigungselements 12c an dem Gehäuse 4c abstützen. Dabei übt das elastische Rastelement 16 bzw. die beiden Federarme 30 auf das Befestigungselement 12c eine Druckkraft in einer von der Unterseite 19 des Gehäuses 4c weg bzw. fort weisenden Richtung aus, wodurch der Rastabschnitt 18 des Befestigungselements 12c in Eingriff mit der Rastausnehmung 26 des Ventilkörpers 2 steht bw. gedrängt wird. Für die Demontage des Ventilkörpers 2 wird das Befestigungselement 12b entgegen der von den Federarmen 30 ausgeübten Druckkraft nach unten in Richtung der Unterseite 19 des Gehäuses 4c gedrückt, wodurch der Rastabschnitt 18 des Befestigungselements 12c außer Eingriff mit der Rastausnehmung 26 des Ventilkörpers 2 gelangt. Der Ventilkörper 2 kann nun aus der Einsteckaufnahme 8 herausgezogen werden. Es versteht sich, dass die Montage des Ventilkörpers 2 an dem Reifenluftdrucksensor 3 in umgekehrter Reihenfolge erfolgt.

Schließlich weist die vierte Ausführungsform eines Reifenüberwachungssystem 1d, das in den Figuren 10 bis 14 gezeigt ist und auf das nachstehend Bezug genommen wird, große Übereinstimmungen mit der zweiten Ausführungsform auf, so dass die Beschreibung der zweiten Ausführungsform auch für die vierte Ausführungsform gilt, sofern nachstehend nichts abweichendes beschrieben ist. Das Gehäuse 4d des Reifendrucksensors 3 weist die Einsteckaufnahme 8 auf, in welche der Ventilkörper 2 mit seinem Befestigungsabschnitt 2 zur Montage eingesteckt ist. Zur genauen Ausrichtung der Öffnung 10 des Ventilkörpers 2 wird dieser mit entsprechend ausgerichteter Abflachung 11 in die Einsteckaufnahme 8 eingesteckt, wobei in dem Befestigungsbereich 7 eine zu der Abflachung korrespondierende Stufe 40 ausgebildet ist, so dass Befestigungsabschnitt 9 des Ventilkörpers 2 nur in einer einzigen bestimmten Ausrichtung in die Einsteckaufnahme 8 einführbar ist. Die Figuren 11 und 12 zeigen dabei die Verriegelungsposition des Befestigungselements 12d, wobei in Figur 11 nur das Befestigungselement 12d und der Ventilkörper 2 gezeigt sind, wohingegen die Figur 12 das in dem Befestigungsbereich 7 aufgenommene Befestigungselement 12d zeigt. In Figur 12 ist zu erkennen, dass der Rastabschnitt 18 des Befestigungselements 12d im Bewegungsweg des Ventilkörpers 2 angeordnet ist. Ferner zeigt Figur 12 aber auch, dass der Querschnitt der Einsteckaufnahme 8 an die Außenkontur des Befestigungselements 12d angepasst ist und eine T-förmige Gestalt aufweist, die zusätzlich zu der Stufe 40 die Ausrichtung des Ventilkörpers 2 zu dem Reifenluftdrucksensor 3 festlegt. Damit nun der Befestigungsabschnitt 9 des Ventilkörpers 2 in die Einsteckaufnahme 8 eingebracht werden kann, muss der Rastabschnitt 18 aus dem Bewegungsweg des Ventilkörpers 2 entfernt werden. Zu diesem Zweck ist das Befestigungselement 12d verschiebbar in der schlitzförmigen Ausnehmung 14 des schornsteinförmigen Befestigungsbereichs gehalten. Bei den zuvor besprochenen Ausführungsformen war dazu ein Monteur notwendig, der das Befestigungselement 12d manuell nach unten in Richtung der Unterseite 19 des Reifenluftdrucksensors 3 drängte. Gemäß der vierten Ausführungsform weist nun der Befestigungsabschnitt 9 des Ventilkörpers 2 eine rampenförmige Schrägfläche 41 auf. Die rampenförmige Schrägfläche 41 ist auf einem Abschnitt der Umfangsfläche des Ventilkörpers 2 ausgebildet und rängt bei Montage des Ventilkörpers 2 das bewegbar gelagerte Befestigungselement 12d über dessen Rastabschnitt 18 in die Entriegelungsposition, also in Richtung zur Unterseite 19 des Gehäuses 4d. Dadurch ist es bei Montage nicht mehr erforderlich, dass der Monteur den Rastabschnitt 18 des Befestigungselements 12d aus dem Bewegungsweg des Ventilkörpers 2 drängt. Dafür sorgt nun bei der vierten Ausführungsform die rampenförmige Schrägfläche (41), wobei auch bei den anderen drei Ausführungsformen der Befestigungsabschnitt 9 eine rampenförmige Schrägfläche 41 aufweisen könnte. Der Befestigungsabschnitt 9 des Ventilkörpers 2 weist die Rastausnehmung 26 auf, die von der Stirnseite des Befestigungsabschnitts 9 aus in Längsrichtung des Ventilkörpers 2 betrachtet hinter der rampenförmigen Schrägfläche 41 ausgebildet ist. In der Verriegelungsposition, die in Figur 11 gezeigt ist, greift der Rastabschnitt 18 des Befestigungselement 12d aus Richtung der Unterseite 19 des Gehäuses 4d in die Rastausnehmung 26 ein.

Wie ferner den Figuren 10, 11 und 13 zu entnehmen ist, weist bei der vierten Ausführungsform der Befestigungsabschnitt 9 des Ventilkörpers 2 zwei Blockierungsnasen 42 auf, die von dem Befestigungsabschnitt 9 abstehen. Für die nachstehende Funktionalität wäre eine einzige Blockierungsnase 42 ausreichend, wobei aber auch mehr als zwei Blockierungsnasen 42 ausgebildet sein könnten. Wichtig ist es hingegen, dass der Durchgang 17 einen an die Blockierungsnasen 42 angepassten Entriegelungsabschnitt 43 aufweist. Der Entriegelungsabschnitt 43 ist auf der den Rastabschnitt 18 gegenüberliegenden Seite des Befestigungselements 12d angeordnet und ausgebildet. Dadurch, dass das Befestigungselement 12d in dem Befestigungsbereich 7 bewegbar gehalten ist, ist der Entriegelungsabschnitt 43 in Verriegelungsposition außerhalb des Bewegungsweges des Ventilkörpers 2 angeordnet ist. Wenn das Befestigungselement 12d in Verriegelungsposition angeordnet ist, liegen die Blockierungsnasen 42 an dem Befestigungselement 12d an, wie Figur 11 zeigt, so dass eine von dem Reifenluftdrucksensor 3 weg gerichtete Bewegung des Ventilkörpers 2 (eine mit Bezug auf Figur 11 in die Zeichnungsebene hinein gerichtete Bewegung) blockiert ist. In Figur 12 ist ebenfalls die Verriegelungsposition des Befestigungselements 12d gezeigt, allerdings hier nicht mit Bezug auf den Ventilkörper (wie in Figur 11) sondern auf den Befestigungsbereich 7 mit seiner in dieser Ausführungsform T-förmig ausgebildeten Einsteckaufnahme 8. Wie in Figur 12 zu erkennen ist, befindet sich sowohl der Rastabschnitt 18 als auch die Blockierungsabschnitte 44 des Befestigungselements 12d im Bewegungsweg des Ventilkörpers 2, so dass dieser doppelt bzw. zweifach gesichert in Verriegelungsposition an dem Reifenluftdrucksensor 3 gehalten ist. Um das Befestigungselement 12d aus der Verriegelungsposition in die Entriegelungsposition zu bringen, muss das Befestigungselement 12d in dem Befestigungsbereich 7 in Richtung der Unterseite 19 des Gehäuses 4d bewegt werden. Zu diesem Zweck weist das Befestigungselement 12d einen kopfseitig ausgebildeten Betätigungsansatz 45 auf, auf den der Monteur drücken kann, um das Befestigungselement 12d in die Entriegelungsposition zu drängen. Der Betätigungsansatz 45 ist zwar nur für die vierte Ausführungsform und die zweite Variante der zweiten Ausführungsform gemäß Figur 7 gezeigt; es versteht sich aber, dass ein solcher Betätigungsansatz 45 auch bei der ersten und dritten Ausführungsform vorgesehen sein kann, um die Betätigung des Befestigungselements 12a; 12c zu erleichtern. Sollte der Monteur bei der Montage oder Demontage, also bei Betätigung des Betätigungsansatzes 45, mit seinem Finger abrutschen, so sind die seitlich des schornsteinförmigen Befestigungsbereiches 7 auf dem Gehäuse 4d angeformten Federarme 27 von jeweiligen Schutzwandelementen 25, die auch auf dem Gehäuse 4d angeordnet und ausgebildet sind und die schon bei der zweiten Ausführungsform für Figur 7 beschrieben wurden, vor Beschädigung geschützt. Wenn das Befestigungselement 12d nun in der Entriegelungsposition angeordnet ist, die in den Figuren 13 und 14 dargestellt ist, dann ist der Entriegelungsabschnitt 43 des Befestigungselements 12d im Bewegungsweg des Ventilkörpers 2. Wie insbesondere Figur 14 zeigt, sind der Entriegelungsabschnitt 43 und auch der Rastabschnitt 18 in der Entriegelungsposition so angeordnet, dass der Durchgang 17 zu dem Querschnitt der Einsteckaufnahme 8 fluchtet. Mit anderen Worten sind der Entriegelungsabschnitt 43 und der Rastabschnitt 18 nicht mehr im Bewegungsweg des T-förmig ausgebildeten Befestigungsabschnitts 9 des Ventilkörpers 2 angeordnet, so dass der Befestigungsabschnitt 9 zur Demontage des Ventilkörpers 2 ungehindert aus der im Querschnitt T-förmig ausgebildeten Einsteckaufnahme 8 und dem Durchgang 17 des Befestigungselements 12d herausziehbar ist.

Ein Reifenüberwachungssystem 1e gemäß einer fünften Ausführungsform, die in den Figuren 15 bis 18 gezeigt ist und auf die nachstehend Bezug genommen wird, weist große Übereinstimmungen mit der vierten Ausführungsform auf, so dass die Beschreibung der vierten Ausführungsform auch für die fünfte Ausführungsform gilt, sofern nachstehend nichts abweichendes beschrieben ist. In das Gehäuse 4e des Reifendrucksensors 3 ist wiederum der Ventilkörper 2 mit seinem Befestigungsabschnitt 2 eingesteckt, wobei das Befestigungselement 12e dafür sorgt, dass der Ventilkörper 2 an dem Gehäuse 4e befestigt ist. Figur 17 zeigt die Verriegelungsposition des Befestigungselements 12e, wohingegen die Figur 18 die Entriegelungsposition des Befestigungselements 12e zeigt. Der Befestigungsabschnitt 9 des Ventilkörpers 2 weist wiederum die zwei Blockierungsnasen 42 auf, die von dem Befestigungsabschnitt 9 abstehen. Das Befestigungselement 12e weist ferner den an die Blockierungsnasen 42 angepassten Entriegelungsabschnitt 43 auf, der auf der dem Rastabschnitt 18 gegenüberliegenden Seite des Befestigungselements 12e ausgebildet ist. Im Unterschied zur vierten Ausführungsform ist bei der fünften Ausführungsform an dem Befestigungselement 12e ein hakenförmig und kopfseitig ausgebildeter Halteansatz 50 mit einem Abstützabschnitt 51 ausgebildet. Der Halteansatz 50 umfasst neben dem Abstützabschnitt 51 den Betätigungsansatz 45, auf den der Monteur drücken kann, um das Befestigungselement 12e in die Entriegelungsposition zu drängen. Der Halteansatz 50 ist insgesamt L-förmig ausgebildet, wobei der Abstützabschnitt 51 parallel zu der schlitzförmigen Ausnehmung 14 in dem domförmigen bzw. schornsteinförmigen Befestigungsbereich 7 verläuft und sich an dem Befestigungsbereich 7 abstützt bzw. von einer Wandung des Befestigungsbereiches 7 abgestützt ist. Dabei sind nicht nur die Rastelemente 16 bzw. Federarme 27 von einem Schutzwandelement 25 geschützt, sondern auch der Abstützabschnitt 51 und der Betätigungsansatz 45 des Halteelements sind von Schutzwandelementen 25 abschnittsweise abgedeckt, um eine unbeabsichtigte Betätigung oder Beschädigung zu verhindern. Bei Betätigung des Betätigungsansatzes 45, indem dieser in Richtung der Unterseite 19 des Gehäuses 4e gedrückt wird und sich das Befestigungselement 12e aus der Verriegelungsposition in die Entriegelungsposition bewegt, gleitet der Abstützabschnitt 51 an der Wandung des Befestigungsbereiches 7 und wird von diesem abgestützt. Der Halteansatz 50 mit Betätigungsansatz 45 und Abstützabschnitt 51 ist zwar nur für die fünfte Ausführungsform gezeigt - es versteht sich aber, dass ein solcher Halteansatz 50 zumindest mit Abstützabschnitt 51 auch bei den anderen Ausführungsformen vorgesehen sein kann, um die Festigkeit der Ventilkörperbefestigung zu erhöhen.

Bei allen fünf Ausführungsformen des Reifenüberwachungssystems 1a, 1b, 1c, 1d, 1e weist der Befestigungsbereich 7 des Gehäuses 4a, 4b, 4c, 4d, 4e seitlich von der schlitzförmigen Ausnehmung 14 angeordnete Sicherungsarme 22 auf. Diese als Schnappnasen ausgebildeten Sicherungsarme 22 dienen dazu, das Befestigungselement 12a, 12b, 12c, 12d, 12e an dem Befestigungsbereich 7 des Gehäuses 4a, 4b, 4c, 4d, 4e zu sichern, indem der Sicherungsarm 22 eine Bewegung des Befestigungselements 12a, 12b, 12c, 12d, 12e von der Entriegelungsposition über die Verriegelungsposition hinaus bzw. von der Unterseite 19 des Gehäuses 4a, 4b, 4c, 4d, 4e fort über die Verriegelungsposition hinaus blockiert. Dabei wirken die Sicherungsarme 22 jeweils mit einem Blockierungsarm 23 zusammen. Die Blockierungsarme 23, die sich bei montiertem Ventilkörper 2 in Richtung dessen Längsachse 15 erstrecken, sind an dem Befestigungselement 12a, 12b, 12c, 12d, 12e ausgebildet. In Verriegelungsposition des Befestigungselements 12a, 12b, 12c, 12d, 12e liegen die Blockierungsarme 23 an den Sicherungsarmen 20 des Gehäuses 4a, 4b, 4c, 4d, 4e an, so dass das Befestigungselement 12a, 12b, 12c, 12d, 12e daran gehindert ist, sich aus der schlitzförmigen Ausnehmung 14 heraus zu bewegen. Die Sicherungsarme 22 stellen folglich eine Art Anschlagsfläche für die Blockierungsarme 23 dar und begrenzen die Bewegung des Befestigungselements 12a, 12b, 12c, 12d, 12e in einer von der Unterseite des Gehäuses 4a, 4b, 4c, 4d, 4e weg gerichteten Bewegungsrichtung. Das Befestigungselement 12a, 12b, 12c, 12d, 12e ist auf diese Weise an dem Reifenluftdrucksensor 3 bzw. dessen Gehäuse 4a, 4b, 4c, 4d, 4e verliersicher gesichert und kann sich nicht aus der schlitzförmigen Ausnehmung 14 herausbewegen.

Zusammenfassend ist vorstehend ein Reifenüberwachungssystem 1a, 1b, 1c, 1d, 1e für fünf verschiedene Ausführungsformen beschrieben worden. Allen fünf Ausführungsformen ist gemein, dass der Ventilkörper 2 an dem Befestigungsbereich 7 des Reifenluftdrucksensors 3 mit Hilfe eines Befestigungselements 12a, 12b, 12c, 12d, 12e lösbar befestigt ist. Das Befestigungselement 12a, 12b, 12c, 12d, 12e wird dabei von dem Rastelement 16 in der Verriegelungsposition gehalten, indem das Rastelement 16 eine Druckkraft in eine von der Unterseite 19 des Gehäuses 4a, 4b, 4c, 4d, 4e fort bzw. weg weisende Richtung ausübt, wodurch der Rastabschnitt 18 des Befestigungselements 12a, 12b, 12c, 12d, 12e in die Rastausnehmung 26 des Ventilkörpers gedrängt wird und mit dieser in Eingriff steht. Mit anderen Worten übt das elastische Rastelement 16 eine das Befestigungselement 12a, 12b, 12c, 12d, 12e in die Verriegelungsposition drängende Vorspannkraft auf das Befestigungselement 12a, 12b, 12c, 12d, 12e aus. Das Rastelement 16 kann dabei als separates Bauteil 12a (siehe erste Ausführungsform gemäß der Figuren 1 bis 4), als einstückig mit dem Gehäuse 4b des Reifenluftdrucksensors 3 ausgebildetes Bauteil 12b, 12d, 12e (siehe zweite, vierte und fünfte Ausführungsform gemäß der Figuren 5 bis 7, 10 bis 14 und 15 bis 18) oder als einstückig mit dem Befestigungselement 12c ausgebildetes Bauteil 12c (siehe dritte Ausführungsform gemäß der Figuren 8 und 9) ausgebildet sein.

## Patentansprüche

1. Reifenüberwachungssystem (1b; 1d; 1e) für ein Fahrzeug zur Ermittlung reifenspezifischer Parameter, aufweisend einen Ventilkörper (2), wenigstens ein Befestigungselement (12b; 12d; 12e) und einen Reifenluftdrucksensor (3) mit einem Gehäuse (4b; 4d; 4e), in welchem Mittel (5, 6) zur Bestimmung mindestens eines reifenspezifischen Parameters und zur drahtlosen Übertragung des mindestens einen reifenspezifischen Parameters, vorzugsweise an ein fahrzeugseitiges Steuergerät, untergebracht sind, wobei das Gehäuse (4b; 4d; 4e) einen Befestigungsbereich (7) aufweist und der Ventilkörper (2) einen Befestigungsabschnitt (9) umfasst, und wobei in einer Verriegelungsposition des wenigstens einen Befestigungselements (12b; 12d; 12e) der Befestigungsabschnitt (9) des Ventilkörpers (2) und der Befestigungsbereich (7) des Gehäuses (4b; 4d; 4e) mit Hilfe des Befestigungselements (12b; 12d; 12e) lösbar miteinander verbunden sind,
wobei der Befestigungsbereich (7) des Gehäuses (4b; 4d; 4e) das wenigstens eine Befestigungselement (12b; 12d; 12e) zwischen der Verriegelungsposition und einer Entriegelungsposition, in welcher der Befestigungsbereich (7) und der Befestigungsabschnitt (9) voneinander lösbar sind, bewegbar lagert und wenigstens ein elastisches Rastelement (16) vorgesehen ist, welches eine Bewegung des wenigstens einen Befestigungselements (12b; 12d; 12e) relativ zum Gehäuse (4b; 4d; 4e) in Richtung der Entriegelungsposition gegen eine von dem wenigstens einen elastischen Rastelement (16) ausgeübte Druckkraft zulässt und welches das wenigstens eine Befestigungselement (12b; 12d; 12e) in die Verriegelungsposition drückt, und
wobei das wenigstens eine Befestigungselement (12b; 12d; 12e) im Wesentlichen ringförmig oder kreissegmentförmig ausgebildet ist und einen Durchgang (17) aufweist, durch den der Befestigungsabschnitt (9) bei Montage des Ventilkörpers (2) an dem Reifenluftdrucksensor (3) steckbar ist, wobei bei montiertem Ventilkörper (2) das wenigstens eine Befestigungselement (12b; 12d; 12e) den Befestigungsabschnitt (9) des Ventilkörpers (2) wenigstens abschnittsweise umgibt und ein Rastabschnitt (18) des im Wesentlichen ringförmig oder kreissegmentförmig ausgebildeten Befestigungselements (12b; 12d; 12e) in der Verriegelungsposition mit dem Befestigungsabschnitt (9) des Ventilkörpers (2) zumindest abschnittsweise in Eingriff steht,
**dadurch gekennzeichnet, dass**
das wenigstens eine elastische Rastelement (16) als einstückig mit dem Gehäuse (4b) ausgebildeter Federarm (27) ausgebildet ist, wobei der Federarm (27) mit seinem ersten Längsende (28) mit dem Gehäuse (4b) verbunden ist und sein zweites Längsende (29) derart gegen das wenigstens eine Befestigungselement (12b) drückt, dass das wenigstens eine elastische Rastelement (16) auf das wenigstens eine Befestigungselement (12b) eine Druckkraft in einer von der Unterseite (19) des Gehäuses (4b) fort weisenden Richtung ausübt.

2. Reifenüberwachungssystem (1b; 1d; 1e) nach Anspruch 1, **dadurch gekennzeichnet, dass** in dem schornsteinförmig ausgebildeten Befestigungsbereich (7) eine schlitzförmige Ausnehmung (14) ausgebildet ist, die sich bei montiertem Ventilkörper (2) quer zu dessen Längsachse (15) erstreckt und in der das wenigstens eine Befestigungselement (12b; 12d; 12e) zwischen der Verriegelungsposition und der Entriegelungsposition verschiebbar gehalten ist.

3. Reifenüberwachungssystem (1a; 1b; 1c; 1d; 1e) nach Anspruch 1, **dadurch gekennzeichnet, dass** der Befestigungsabschnitt (9) des Ventilkörpers (2) eine rampenförmige Schrägfläche (41) aufweist, die auf einem Abschnitt der Umfangsfläche des Ventilkörpers (2) ausgebildet ist, wobei die rampenförmige Schrägfläche (41) bei Montage des Ventilkörpers (2) das bewegbar gelagerte Befestigungselement (12b; 12d; 12e) über den Rastabschnitt (18) in die Entriegelungsposition drängt.

4. Reifenüberwachungssystem (1b; 1d; 1e) nach Anspruch 3, **dadurch gekennzeichnet, dass** der Befestigungsabschnitt (9) des Ventilkörpers (2) eine Rastausnehmung (26) aufweist, die von der Stirnseite des Befestigungsabschnitts (9) aus in Längsrichtung des Ventilkörpers (2) betrachtet hinter der rampenförmigen Schrägfläche (41) an dem Befestigungsabschnitt (9) ausgebildet ist und in die der Rastabschnitt (18) des Befestigungselement (12a; 12b; 12c; 12d; 12e) in Verriegelungsposition eingreift.

5. Reifenüberwachungssystem (1d; 1e) nach Anspruch 1, 3 oder 4, **dadurch gekennzeichnet, dass** von dem Befestigungsabschnitt (9) des Ventilkörpers (2) wenigstens eine Blockierungsnase (42) absteht, wobei der Durchgang (17) einen an die wenigstens eine Blockierungsnase (42) angepassten Entriegelungsabschnitt (43) aufweist, der in Verriegelungsposition außerhalb des Bewegungsweges des Ventilkörpers (2) derart angeordnet ist, dass die wenigstens eine Blockierungsnase (42) an dem Befestigungselement (12d; 12e) anliegt und eine von dem Reifenluftdrucksensor (3) weg gerichtete Bewegung des Ventilkörpers (2) blockiert ist, und der in Entriegelungsposition im Bewegungsweg des Ventilkörpers (2) derart angeordnet ist, dass der Ventilkörper (2) zur Demontage aus dem Durchgang (17) herausziehbar ist.

6. Reifenüberwachungssystem (1b) nach Anspruch 1, **dadurch gekennzeichnet, dass** sich parallel zu dem wenigstens einen elastischen Rastelement (16) zumindest ein Schutzwandelement (25) erstreckt, welches auf dem Gehäuse (4b) angeformt ist und das wenigstens eine elastische Rastelement (16) in einer von dem Gehäuse (4b) fort weisenden Richtung überragt.

7. Reifenüberwachungssystem (1b; 1d; 1e) nach einem der vorhergehenden Ansprüche, **dadurch gekennzeichnet, dass** der Befestigungsbereich (7) des Gehäuses (4b; 4d; 4e) zumindest einen Sicherungsarm (22) aufweist, der das wenigstens eine Befestigungselement (12b; 12d; 12e) an dem Befestigungsbereich (7) des Gehäuses (4a; 4b; 4c; 4d) sichert, indem der zumindest eine Sicherungsarm (22) eine von der Entriegelungsposition über die Verriegelungsposition hinaus gerichtete Bewegung des wenigstens einen Befestigungselements (12b; 12d; 12e) blockiert.

8. Reifenüberwachungssystem (1b; 1d; 1e) nach Anspruch 7, **dadurch gekennzeichnet, dass** das wenigstens eine Befestigungselement (12b; 12d; 12e) einen Blockierungsarm (23) aufweist, der in Verriegelungsposition des wenigstens einen Befestigungselements (12b; 12d; 12e) an dem Sicherungsarm (20) des Gehäuses (4b; 4d; 4e) anliegt.

9. Reifenüberwachungssystem (1b; 1d; 1e) nach einem der vorhergehenden Ansprüche, **dadurch gekennzeichnet, dass** der Befestigungsabschnitt (9) des Ventilkörpers (2) zumindest abschnittsweise eine Abflachung (11) aufweist und der Befestigungsbereich (7) des Gehäuses (4b; 4d; 4e) eine komplementär zur Abflachung (11) ausgebildete Einsteckaufnahme (8) aufweist, so dass zur Montage des Ventilkörpers (2) an dem Reifenluftdrucksensor (3) der Befestigungsabschnitt (9) des Ventilkörpers (2) verdrehsicher in die Einsteckaufnahme (8) einsteckbar ist.

10. Reifenüberwachungssystem (1b; 1d; 1e) nach einem der vorhergehenden Ansprüche, **dadurch gekennzeichnet, dass** das elastische Rastelement (16) eine das Befestigungselement (12b; 12d; 12e) in die Verriegelungsposition drängende Vorspannkraft auf das Befestigungselement (12b; 12d; 12e) ausübt.

11. Reifenüberwachungssystem (1b; 1d; 1e) nach einem der vorhergehenden Ansprüche, **dadurch gekennzeichnet, dass** das Befestigungselement (12e) einen hakenförmig und kopfseitig ausgebildeten Halteansatz (50) mit wenigstens einem Abstützabschnitt (51), der sich an dem Befestigungsbereich (7) abstützt, aufweist.

## Claims

1. A tire monitoring system (1b; 1d; 1e) for a vehicle for determining tire-specific parameters, having a valve body (2), at least one fastening element (12b; 12d; 12e) and a tire air pressure sensor (3) comprising a housing (4b; 4d; 4e), in which means (5, 6) for determining at least one tire-specific parameter and for a wireless transmission of the at least one tire-specific parameters, preferably to a vehicle-side control device, are accommodated, wherein the housing (4b; 4d; 4e) has a fastening region (7) and the valve body (2) comprises a fastening section (9), and wherein, in a locked position of the at least one fastening element (12b; 12d; 12e), the fastening section (9) of the valve body (2) and the fastening region (7) of the housing (4b; 4d; 4e) are releasably connected to one another with the help of the fastening element (12b; 12d; 12e),
wherein the fastening region (7) of the housing (4b; 4d; 4e) movably supports the at least one fastening element (12b; 12d; 12e) between the locked position and an unlocked position, in which the fastening region (7) and the fastening section (9) can be released from one another, and at least one elastic latching element (16) is provided, which allows a movement of the at least one fastening element (12b; 12d; 12e) relative to the housing (4b; 4d; 4e) in the direction of the unlocked position against a pressure exerted by the at least one elastic latching element (16), and which presses the at least one fastening element (12b; 12d; 12e) into the locked position, and
wherein the at least one fastening element (12b; 12d; 12e) is formed in a substantially annular or segment circle-shaped manner and has a passage (17), through which the fastening section (9) can be inserted when the valve body (2) is mounted to the tire air pressure sensor (3), wherein, when the valve body (2) is mounted, the at least one fastening element (12b; 12d; 12e) surrounds the fastening section (9) of the valve body (2) at least in sections and a latching section (18) of the fastening element (12b; 12d; 12e), which is formed in a substantially annular or circular segment-shaped manner, is engaged at least in sections with the fastening section (9) of the valve body (2) in the locked position,
**characterized in that**
the at least one elastic latching element (16) is formed as spring arm (27), which is formed integrally with the housing (4b), wherein the spring arm (27) is connected to the housing (4b) with its first longitudinal end (28) and its second longitudinal end (29) presses against the at least one fastening element (12b) such that the at least one elastic latching element (16) exerts a pressure on the at least one fastening element (12b) in a direction, which points away from the underside (19) of the housing (4b).

2. The tire monitoring system (1b; 1d; 1e) according to claim 1, **characterized in that** a slot-shaped recess (14) is formed in the chimney-shaped fastening region (7), which recess, when the valve body (2) is mounted, extends transverse to the longitudinal axis (15) thereof and in which the at least one fastening element (12b; 12d; 12e) is held between the locked position and the unlocked position in a displaceable manner.

3. The tire monitoring system (1a; 1b; 1c; 1d; 1e) according to claim 1, **characterized in that** the fastening section (9) of the valve body (2) has a ramp-shaped inclined surface (41), which is formed on a section of the peripheral surface of the valve body (2), wherein, when the valve body (2) is mounted, the ramp-shaped inclined surface (41) forces the movably supported fastening element (12b; 12d; 12e) over the latching section (18) into the unlocked position.

4. The tire monitoring system (1b; 1d; 1e) according to claim 3, **characterized in that** the fastening section (9) of the valve body (2) has a latching recess (26), which is formed on the fastening section (9) behind the ramp-shaped inclined surface (41), viewed from the front side of the fastening section (9) in the longitudinal direction of the valve body (2), and with which the latching section (18) of the fastening element (12a; 12b; 12c; 12d; 12e) engages when in the locked position.

5. The tire monitoring system (1d; 1e) according to claim 1, 3 or 4, **characterized in that** at least one blocking lug (42) protrudes from the fastening section (9) of the valve body (2), wherein the passage (17) has an unlocking section (43), which is adapted to the at least one blocking lug (42) and which, when in the locked position, is arranged outside of the movement path of the valve body (2) such that the at least one blocking lug (42) bears against the fastening element (12d; 12e) and a movement of the valve body (2) directed away from the tire air pressure sensor (3) is blocked, and which, in the unlocked position, is arranged in the movement path of the valve body (2) such that the valve body (2) can be pulled out of the passage (17) for removal thereof.

6. The tire monitoring system (1b) according to claim 1, **characterized in that** parallel to the at least one elastic latching element (16), at least one protective wall element (25) extends, which is formed integrally on the housing (4b) and which projects above the at least one elastic latching element (16) in a direction, which points away from the housing (4b).

7. The tire monitoring system (1b; 1d; 1e) according to one of the preceding claims, **characterized in that** the fastening region (7) of the housing (4b; 4d; 4e) has at least one securing arm (22), which secures the at least one fastening element (12b; 12d; 12e) against the fastening region (7) of the housing (4a; 4b; 4c; 4d), **in that** the at least one securing arm (22) blocks a movement of the at least one fastening element (12b; 12d; 12e), which is directed from the unlocked position beyond the locked position.

8. The tire monitoring system (1b; 1d; 1e) according to claim 7, **characterized in that** the at least one fastening element (12b; 12d; 12e) has a blocking arm (23), which, in the locked position of the at least one fastening element (12b; 12d; 12e), bears against the securing arm (20) of the housing (4b; 4d; 4e).

9. The tire monitoring system (1b; 1d; 1e) according to one of the preceding claims, **characterized in that** the fastening section (9) of the valve body (2) has, at least in sections, a bevel (11) and the fastening region (7) of the housing (4b; 4d; 4e) has an insertion accommodation (8), which is formed complementary to the bevel (11), so that the fastening section (9) of the valve body (2) can be inserted into the insertion accommodation (8) in a non-rotatable manner for mounting the valve body (2) to the tire air pressure sensor (3).

10. The tire monitoring system (1b; 1d; 1e) according to one of the preceding claims, **characterized in that** the elastic latching element (16) exerts a pretensioning force on the fastening element (12b; 12d; 12e), which forces the fastening element (12b; 12d; 12e) into the locked position.

11. The tire monitoring system (1b; 1d; 1e) according to one of the preceding claims, **characterized in that** the fastening element (12e) has a hook-shaped retaining lug (50), which is formed on the head side, comprising at least one support section (51), which is supported on the fastening region (7).

## Revendications

1. Système de surveillance de pneu (1b ; 1d ; 1e) pour un véhicule destiné à déterminer des paramètres spécifiques au pneu, comportant un corps de valve (2), au moins un élément de fixation (12b ; 12d ; 12e) et un capteur de pression d'air du pneu (3) avec un boîtier (4b ; 4d ; 4e), dans lequel sont incorporés des moyens (5, 6) pour déterminer au moins un paramètre spécifique au pneu et pour la transmission sans fil d'au moins un paramètre spécifique au pneu, de préférence à un appareil de commande du côté véhicule, le boîtier (4b ; 4d ; 4e) comportant une zone de fixation (7) et le corps de valve (2) comprenant une section de fixation (9), et dans une position de verrouillage d'au moins un élément de fixation (12b ; 12d ; 12e), la section de fixation (9) du corps de valve (2) et la zone de fixation (7) du boîtier (4b ; 4d ; 4e) étant reliées l'une à l'autre de façon amovible à l'aide de l'élément de fixation (12b ; 12d ; 12e),
la zone de fixation (7) du boîtier (4b ; 4d ; 4e) logeant de façon mobile au moins un élément de fixation (12b ; 12d ; 12e) entre la position de verrouillage et une position de déverrouillage dans laquelle la zone de fixation (7) et la section de fixation (9) sont séparables l'une de l'autre et au moins un élément d'encliquetage élastique (16) étant prévu, lequel permet un mouvement d'au moins un élément de fixation (12b ; 12d ; 12e) par rapport au boîtier (4b ; 4d ; 4e) en direction de la position de déverrouillage contre une force de pression exercée par au moins un élément d'encliquetage élastique (16) et lequel pousse au moins un élément de fixation (12b ; 12d ; 12e) dans la position de verrouillage, et au moins un élément de fixation (12b ; 12d ; 12e) étant constitué pour l'essentiel en forme d'anneau ou en forme de segment de cercle et comportant un passage (17) à travers lequel la section de fixation (9) peut être enfichée lors du montage du corps de valve (2) sur le capteur de pression de pneu (3), au moins un élément de fixation (12b ; 12d ; 12e) entourant au moins par section la section de fixation (9) du corps de valve (2) lorsque le corps de valve (2) est monté et une section d'encliquetage (18) de l'élément de fixation (12b ; 12d ; 12e) constitué pour l'essentiel en forme d'anneau ou en forme de segment de cercle venant en prise dans la position de verrouillage au moins par section avec la section de fixation (9) du corps de valve (2),
**caractérisé en ce qu'**
au moins un élément d'encliquetage élastique (16) est constitué sous la forme d'un bras de ressort (27) constitué en une seule pièce avec le boîtier (4b), le bras de ressort (27) étant relié avec sa première extrémité longitudinale (28) au boîtier (4b) et sa deuxième extrémité longitudinale (29) appuyant contre au moins un élément de fixation (12b) de telle sorte qu'au moins un élément d'encliquetage élastique (16) exerce sur au moins un élément de fixation (12b) une force de pression dans une direction s'éloignant de la face inférieure (19) du boîtier (4b).

2. Système de surveillance de pneu (1b ; 1d ; 1e) selon la revendication 1, **caractérisé en ce que** dans la zone de fixation (7) constituée comme une cheminée est constituée un évidement (14) en forme de fente, qui s'étend lorsque le corps de valve (2) est monté, transversalement à l'axe longitudinal (15) de celui-ci et dans lequel est maintenu pouvant bouger au moins un élément de fixation (12b ; 12d ; 12e) entre la position de verrouillage et la position de déverrouillage.

3. Système de surveillance de pneu (1a ; 1b ; 1c ; 1d ; 1e) selon la revendication 1, **caractérisé en ce que** la section de fixation (9) du corps de valve (2) comporte une surface inclinée (41) en forme de rampe, qui est constituée sur une section de la surface périphérique du corps de valve (2), la surface inclinée (41) en forme de rampe repoussant lors du montage du corps de valve (2), l'élément de fixation (12b ; 12d ; 12e) logé mobile dans la position de déverrouillage par le biais de la section d'encliquetage (18).

4. Système de surveillance de pneu (1b ; 1d ; 1e) selon la revendication 3, **caractérisé en ce que** la section de fixation (9) du corps de valve (2) comporte un évidement d'encliquetage (26) qui est constitué vu de la face avant de la section de fixation (9) dans la direction longitudinale du corps de valve (2), derrière la surface inclinée (41) en forme de rampe sur la section de fixation (9) et dans lequel vient en prise dans la position de verrouillage la section d'encliquetage (18) de l'élément de fixation (12a ; 12b ; 12c ; 12d ; 12e).

5. Système de surveillance de pneu (1d ; 1e) selon la revendication 1, 3 ou 4, **caractérisé en ce qu'**au moins un ergot de blocage (42) ressort de la section de fixation (9) du corps de valve (2), le passage (17) comportant une section de déverrouillage (43) adaptée à au moins un ergot de blocage (42), laquelle est disposée en position de verrouillage en dehors de la course du corps de valve (2) de telle sorte qu'au moins un ergot de blocage (42) repose sur l'élément de fixation (12d ; 12e) et un mouvement du corps de valve (2) s'éloignant du capteur de pression d'air du pneu (3) est bloqué et laquelle est disposée en position de déverrouillage dans la course du corps de valve (2) de telle sorte que le corps de valve (2) peut être extrait du passage (17) pour démontage.

6. Système de surveillance de pneu (1b) selon la revendication 1, **caractérisé en ce qu'**au moins un élément de paroi de protection (25) s'étend parallèlement à au moins un élément d'encliquetage élastique (16), lequel est conformé sur le boîtier (4b) et au moins un élément d'encliquetage (16) élastique dépasse dans une direction s'éloignant du boîtier (4b).

7. Système de surveillance de pneu (1b ; 1d ; 1e) selon l'une quelconque des revendications précédentes, **caractérisé en ce que** la zone de fixation (7) du boîtier (4b ; 4d ; 4e) comporte au moins un bras de fixation (22), qui fixe au moins un élément de fixation (12b ; 12d ; 12e) sur la zone de fixation (7) du boîtier (4a ; 4b ; 4c ; 4d), au moins un bras de fixation (22) bloquant un mouvement d'au moins un élément de fixation (12b ; 12d ; 12e), orienté de la position de déverrouillage au-delà de la position de verrouillage.

8. Système de surveillance de pneu (1b ; 1d ; 1e) selon la revendication 7, **caractérisé en ce qu'**au moins un élément de fixation (12b ; 12d ; 12e) comporte un bras de blocage (23) qui repose en position de verrouillage d'au moins un élément de fixation (12b ; 12d ; 12e) sur le bras de fixation (20) du boîtier (4b ; 4d ; 4e).

9. Système de surveillance de pneu (1b ; 1d ; 1e) selon l'une quelconque des revendications précédentes, **caractérisé en ce que** la section de fixation (9) du corps de valve (2) comporte au moins par section un méplat (11) et la zone de fixation (7) du boîtier (4b ; 4d ; 4e) comporte un logement d'enfichage (8) constitué de façon complémentaire au méplat (11) de telle sorte que pour le montage du corps de valve (2) sur le capteur de pression d'air du pneu (3), la section de fixation (9) du corps de valve (2) peut être enfoncée solidaire en rotation dans le logement d'enfichage (8).

10. Système de surveillance de pneu (1b ; 1d ; 1e) selon l'une quelconque des revendications précédentes, **caractérisé en ce que** l'élément d'encliquetage (16) élastique exerce une force de précontrainte sur l'élément de fixation (12b ; 12d ; 12e), repoussant l'élément de fixation (12b ; 12d ; 12e) dans la position de verrouillage.

11. Système de surveillance de pneu (1b ; 1d ; 1e) selon l'une quelconque des revendications précédentes, **caractérisé en ce que** l'élément de fixation (12e) comporte un étrier de retenue (50) constitué en forme de crochet et du côté tête avec au moins une section d'appui (51), qui s'appuie sur la zone de fixation (7).
